# NEUE EUROPÄISCHE PATENTSCHRIFT

(11) **EP 0 899 461 B2**
(45) Veröffentlichungstag und Bekanntmachung des Hinweises auf die Entscheidung über den Einspruch: **02.08.2006**
(45) Hinweis auf die Patenterteilung: 16.01.2002
(21) Anmeldenummer: 98113238.4
(22) Anmeldetag: 16.07.1998
(51) Int. Cl.: F04D 13/08, F04D 29/60, F16L 27/12

(54) **Tauchpumpe mit einer biegesteifen Auslassleitung**
Submerged pump with a rigid discharge duct
Pompe immergée avec une conduit de décharge rigide

(30) Priorität: 29.08.1997 DE 19737670
(43) Veröffentlichungstag der Anmeldung: 03.03.1999
(73) Patentinhaber: GARDENA Manufacturing GmbH, 89079 Ulm (DE)
(72) Erfinder: Katzer, Johann, 89231 Neu-Ulm (DE)
(74) Vertreter: Patentanwälte Ruff, Wilhelm, Beier, Dauster & Partner

(56) Entgegenhaltungen:
- DE-A- 3 339 722
- DE-A- 3 921 549
- US-A- 3 085 513
- US-A- 5 380 158
- US-A- 5 577 895
- Propekt "easytec(96) 100-0/0496(B)"
- Bedienungsanleitung Fontanette 10/26(TF)/35(TF) vom 01.01.1996

## Beschreibung

Die Erfindung betrifft eine Vorrichtung zur Leitung einer Flüssigkeit von einer mindestens teilweise in die Flüssigkeit eintauchbaren Tauchpumpe zu einer außerhalb der Flüssigkeit anordenbaren Flüssigkeitsausgabe, gemäß dem Oberbegriff von Anspruch 1 sowie eine Tauchpumpenanordnung gemäß dem Oberbegriff von Anspruch 12

Tauchpumpen sind für den Unterwasserbetrieb geeignete Flüssigkeitspumpen, die beispielsweise im Rahmen der Gartenbewässerung eingesetzt werden, um gesammeltes Regenwasser aus Brunnen, Teichen oder Regenwasser-Sammelbehältem zu fördern. Sie sind beispielsweise auch zum Auspumpen von überfluteten Kellerräumen o. dgl. geeignet. In der Regel befinden sich Tauchpumpen vollständig unter Wasser, wobei sie normalerweise auf dem flüssigkeitsbedeckten Boden stehen und die Flüssigkeit durch bodennahe Ansaugöffnungen ansaugen. Die Flüssigkeit wird dann durch einen Flüssigkeitsauslaß abgegeben, der in der Regel ebenfalls unterhalb der Flüssigkeitsoberfläche liegt.

Zur Leitung der geförderten Flüssigkeit aus der Flüssigkeit heraus ist es bekannt, einen Schlauch an einen Flüssigkeitsauslaßstutzen des Tauchpumpengehäuses anzuschließen, beispielsweise über eine Schlauch-Schnellkupplung. Der Schlauch wird normalerweise vor Absenken der Tauchpumpe in die Flüssigkeit am Flüssigkeitsauslaß angebracht und bildet mit seinem der Pumpe abgewandten Ende eine Flüssigkeitsausgabe, an die beispielsweise eine Spritze, eine Brause, ein Regner oder eine Bewässerungsanlage angeschlossen werden kann.

Bei bekannten Tauchpumpen-Anordnungen mit Tauchpumpe und Schlauch können sich Probleme ergeben, wenn die zur Wasserentnahme am besten geeignete Stelle des Flüssigkeitsreservoirs von außen schwer zugänglich ist. Für die optimale Plazierung der mit einem Handgriff versehenen Tauchpumpe muß sich der Anwender unter Umständen selbst mit Armen oder Füßen in die zu pumpende Flüssigkeit begeben, um die Tauchpumpe optimal aufzustellen. Dies kann insbesondere bei verschmutztem Wasser oder kühler Witterung unangenehm sein. Auch die Wasserentnahme am freien Ende des Schlauches kann umständlich sein, wenn beispielsweise die Flüssigkeitsausgabe nach Art eines Wasserhahns zur Füllung eines Eimers o. dgl. verwendet werden soll. Das freie Schlauchende mit der Flüssigkeitsausgabe muß ggf. mit einer Hand gehalten werden, während die andere Hand den Eimerhält. Das Fehlen einer dritten Hand zum Abstellen der Flüssigkeitszufuhr nach Füllen des Eimers ist in derartigen Situationen schon beklagt worden.

Es sind auch Tauchpumpen-Anordnungen bekannt, bei denen am Auslaß der Tauchpumpe ein biegesteifes Rohr als Leitungseinheit starr und lösbar angebracht werden kann. Ein Beispiel ist in der US-A-3 085 513 gezeigt. Das aus Eisen oder Kupfer bestehen-de Rohr ist so geformt, daß sein Ende über den Rand eines Behälters hinausragt, in den die Tauchpumpe eingesetzt ist.

Ein anderes Beispiel ist in der DE 39 21 549 gezeigt. Eine für den festen Einbau in einen Schmutzwasser- oder Fäkalienbehälter vorgesehene Tauchpumpe hat einen nach oben gerichteten Auslaß, an den ein U-förmig gebogenes, als Leitungseinheit dienendes Rohrstück angeschraubt werden kann. Das als Flüssigkeitsausgabe dienende freie Ende des Rohrstückes ist nach unten gerichtet. An der Behälterwand des Fäkalienbehälters ragt das freie Ende einer Förderrohrleitung mit einer nach oben offenen Anschlußöffnung in den Behälter. Bei Absenken der mit der U-Rohrleitung verbundenen Tauchpumpe an einem vorgegebenen Platz in den Behälter soll das Ende der Rohrleitung mittels einer Steckkupplung selbstdichtend in die Anschlußöffnung eingleiten. Dies setzt eine genau festgelegte Geometrie des U-Rohrstückes voraus. Bei bekannten Springbrunnenpumpen der Marke "Fontanette" aus dem Prospekt "easytec (196) 100.0/0496 (B) " ist ein teleskopierbares Düsenrohr vorgesehen, um eine Springbrunnenfontäne zu erzeugen. Nur die Düse am oberen Ende des Düsenrohres ragt über einen Wasserspiegel, während am unteren Ende des Düsenrohres ein Zweigumschluß vergesehen ist.

Die Erfindung stellt sich die Aufgabe, eine Vorrichtung zur Leitung einer von einer Tauchpumpe gepumpten Flüssigkeit zu schaffen, die eine bequeme Bedienung und einen effizienteren Einsatz von Tauchpumpen-Anordnungen insbesondere im Gartenbereich ermöglicht.

Zur Lösung dieser Aufgabe schlägt die Erfindung eine Vorrichtung mit den Merkmalen von Anspruch 1 vor.

Gemäß der Erfindung ist zur Leitung der von der Tauchpumpe geförderten Flüssigkeit zur Flüssigkeitsausgabe eine biegesteife Leitungseinheit vorgesehen, die zur starren Verbindung mit der Tauchpumpe ausgebildet ist. Die lösbar an die Tauchpumpe anschließbare, biegesteife Leitungseinheit bildet nach Anschluß an die Tauchpumpe mit dieser eine Tauchpumpen-Anordnüng, die insgesamtformstabil ist und bei der die Flüssigkeitsausgabe in geometrisch fester Beziehung zur Tauchpumpe steht. Die räumliche Anordnung der Flüssigkeitsausgabe ist daher durch die Position und Stellung der in der Regel recht schweren und standsicheren Tauchpumpe festgelegt. Die Flüssigkeitsausgabe benötigt daher keine zusätzliche Fixierung und muß bei Flüssigkeitsentnahme nicht festgehalten werden.

Für einen variablen Einsatz der Tauchpumpen-Anordnung insbesondere in unterschiedlich tiefen und/oder ausgedehnten Flüssigkeitsreservoirs ist erfindungsgemäß vorgesehen, daß die Leitungseinheit eine Länge hat, die, vorzugsweise stufenlos, veränderbar ist. Dadurch kann die Tauchpumpen-Anordnung in ihren Dimensionen den entsprechenden Dimensionen des Flüssigkeitsreservoirs und/oder den Anforderungen an die räumliche Anordnung der Flüssigkeitsausgabe optimal angepaßt werden. Es ist die Länge der Leitungseinheit auf das gewünschte Maß feststellbar, was bei einer bevorzugten Ausführungsform werkzeuglos, d.h. ohne Zuhilfenahme von Werkzeugen manuell möglich ist. Die Länge der Leitungseinheit ist im wesentlichen durch die Länge des durch sie gebildeten Flüssigkeitskanals gegeben.

Eine bevorzugte Ausführungsform zeichnet sich dadurch aus, daß die Leitungseinheit als Rohr mit mehreren vorzugsweise lösbar miteinander verbindbaren Rohrsegmenten aufgebaut ist. Diese können beispielsweise aneinander oder ineinander geschraubt oder geklemmt werden., ggf. unter Zwischenlage von Dichtungen. Die Rohrsegmente können ggf. unterschiedliche Längen aufweisen, so daß über geeignete Kombinationen von Rohrsegmenten die gewünschte Länge einstellbar ist. Es können gerade und/oder gekrümmte Rohrsegmente verwendet werden. Die Verwendung von Rohrsegmenten hat unter anderem herstellungstechnische Vorteile.

Bei einer bevorzugten Ausführungsform ist die Leitungseinheit als Teleskoprohr ausgebildet, wodurch eine stufenlose Längeneinstellung zumindest in einem gewissen Längenbereich möglich ist. Vorzugsweise ist ein erstes Rohrsegment und ein in dem ersten Rohrsegment axial verschiebbar angeordnetes zweites Rohrsegment vorgesehen. Die relative Lage der Rohrsegmente zueinander kann vorzugsweise durch eine Klemmeinrichtung festgesetzt werden, die die Rohrsegmente aneinander festlegt und die vorzugsweise manuell betätigbar ist. Die Rohrsegmente können mittels einer Dichteinrichtung flüssigkeitsdicht gegeneinander abgedichtet sein, so daß zwischen Pumpe und Flüssigkeitsausgabe auch bei höheren Flüssigkeitsdrücken keine Flüssigkeit aus dem durch die Leitungseinheit gebildeten Flüssigkeitskanal austritt.

Für viele Anwendungen kann es ausreichen, wenn die Leitungseinheit selbsttragend ist. Ihre Form kann unabhängig vom in der Leitungseinheit herrschenden Flüssigkeitsdruck im wesentlichen stabil sein. Vorzugsweise ist die Leitungseinheit derart biegesteif, daß die Tauchpumpe durch Bewegung der Leitungseinheit bewegbar ist. Eine derartige Leitungseinheit ermöglicht eine Handhabung der Pumpen-Anordnung in der Art, daß die Tauchpumpe unter Verwendung der Leitungseinheit nach Art eines Stiels an eine ggf. sonst nur schwer zugängliche Stelle im Flüssigkeitsreservoir plaziert werden kann. Die Leitungseinheit hat bei einer derartigen Ausführungsform neben der Funktion als Flüssigkeitsleitung eine weitere Funktion als verlängerter Griff für die Tauchpumpe.

Es ist möglich, zur Bildung der Leitungseinheit einen an sich biegeschlaffen Schlauch zu verwenden und durch geeignete Versteifungsmaßnahmen biegesteif zu machen, beispielsweise ihn durch ein im wesentlichen biegesteifes Gestell zu unterstützen. Bei einer bevorzugten Ausführungsform weist die Leitungseinheit mindestens ein, vorzugsweise genau ein biegesteifes Rohr auf. Das einen Flüssigkeitskanal bildende Rohr bringt zweckmäßigerweise die notwendige Steifigkeit mit, so daß keine zusätzlichen äußeren oder inneren Versteifungselemente notwendig sind. Das Rohr kann aus Kunststoff bestehen, ist jedoch bei einer bevorzugten Ausführungsform ein metallisches Rohr, insbesondere aus Aluminium. Aluminium ist einerseits spezifisch leicht, so daß eine Schrägaufstellung nicht zu einer starken Kippbelastung der Tauchpumpen-Anordnung führt, andererseits ist Aluminium korrosionsbeständig und daher auch für den Dauereinsatz in ggf. aggressiven Flüssigkeiten geeignet.

Bei einer bevorzugten Ausführungsform weist die Leitungseinheit, insbesondere das Rohr eine Abwinkelung auf, in der die gepumpte Flüssigkeit ihre Flußrichtung ändert. Durch eine oder mehrere Abwinkelungen im Verlauf der Leitungseinheit kann dieser unter Beibehaltung der Biegesteifigkeit ggf. um Hindernisse wie Bäume, Büsche o. dgl. herumgeführt werden. Eine Abwinkelung kann einen Winkel von wenigen Graden oder wenigen zehn Graden bilden. Bei einer bevorzugten Ausführungsform stehen die an die Abwinkelung anschließenden vorzugsweise geraden Leitungsabschnitte in einem Winkel von mehr als 90° zueinander. Insbesondere kann der Winkel zwischen 120° und 160° liegen, vorzugsweise bei ca. 145°. Eine hakenförmige Abwinkelung erlaubt unter anderem die Einhängung der gesamten Anordnung beispielsweise an der Oberkante eines Wasserbehälters mit im wesentlichen senkrechen Wänden. Durch die Abwinkelung weist die Leitungseinrichtung eine Einhängvorrichtung zum Einhängen der Leitungseinheit oder der aus Leitungseinheit und Pumpe gebildeten Pumpen-Anordnung an eine Halterung wie z.B. einer Querstange oder einer Flüssigkeitsbehälterwand auf.

Zwar ist eine relativ scharfe Abwinkelung möglich, es ist jedoch bevorzugt, wenn die Abwinkelung knickfrei ist und vorzugsweise einen Krümmungsradius hat, der zwischen dem Doppelten und dem Fünffachen des Durchmessers der Flüssigkeitsleitung beträgt, vorzugsweise ca. das Dreifache des Durchmessers der Flüssigkeitsleitung. Bevorzugt ist es, wenn der Krümmungsradius im Bereich der Abwinkelung gleichmäßig ist, so daß die Leitung, insbesondere das Rohr im Bereich der Abwinkelung kreisbogenförmig verläuft. Eine gleichmäßige Rohrkrümmung hat in der Fertigung den Vorteil, daß ein gerades Rohr eingesetzt werden kann, welches nachträglich gebogen werden kann. Eine nicht zu kleine, vorzugsweise gleichmäßige Krümmung hat zudem strömungstechnische Vorteile.

Bei einer bevorzugten Ausführungsform ist mindestens ein Rohrsegment, vorzugsweise das erste Rohrsegment gerade und damitfertigungstechnisch besonders einfach herzustellen. Ein anderes Rohrsegment, vorzugsweise das zweite Rohrsegment, weist die Abwinkelung auf. Vorzugsweise hat das Rohr auf mindestens einer Seite der Abwinkelung, vorzugsweise beidseitig der Abwinkelung, einen geraden Rohrabschnitt. Ein derart gewinkeltes Rohr bzw. Rohrsegment ist über die geraden Rohrabschnitte besonders einfach an axial benachbarte Rohrsegmente und/oder an weitere Funktionseinheiten wie Rohrverbinder oder Ventileinrichtungen, anschließbar.

Zur starren Verbindung der Leitungsainheit mit der Tauchpumpe kann an der Leitungseinheit, insbesondere an dem ersten Rohrsegment, eine Anschlußeinrichtung zur starren, flüssigkeitsleitenden Verbindung der Leitungseinheit mit einem Flüssigkeitsauslaß der Tauchpumpe vorgesehen sein. Der Flüssigkeitsauslaß kann beispielsweise in Form eines bei eben stehender Tauchpumpe vertikal verlaufenden Stutzens ausgebildet sein. Die Leitungseinheit ist lösbar mit der Tauchpumpe, insbesondere mit dem Flüssigkeitsauslaß der Tauchpumpe, verbindbar. Anstelle der Leitungsvorrichtung kann daherfür andere Einsatzfälle der Pumpenausgang auch mit einem gewöhnlichen Hahnstück einer Schnellkupplung versehen werden, an welcher dann direkt ein Schlauch angeschlossen werden kann. Bei einer bevorzugten Ausführungsform ist eine manuell betätigbare Schraubverbindung vorgesehen. Bei der Herstellung der Schraubverbindung müssen vorteilhaft die Leitungseinrichtung selbst und die Tauchpumpe nicht relativ zueinander verdreht werden. Das Rohr der Leitungseinheit wird vielmehr stirnseitig auf eine Stirnfläche etwa gleichen Durchmessers des Flüssigkeitsauslaßstutzens aufgesetzt und mittels einer Verbindungseinrichtung nach Art einer Überwurfmutter durch Schrauben starr mit dem Flüssigkeitsauslaßstutzen verbunden.

Es weist die Leitungseinheit eine der Flüssigkeitsausgabe zugeordnete Absperreinrichtung für die Flüssigkeitsausgabe auf, die vorzugsweise als Absperrventil ausgebildet ist, daß insbesondere stufenlos einstellbar ist, vorzugsweise per Hand. Durch die Absperreinrichtung kann auch bei häufiger Unterbrechung der Flüssigkeitsentnahme wie z.B. bei mehrmaligem Füllen einer Gießkanne, die Tauchpumpe ununterbrochen weiterlaufen, ohne daß es zu unerwünschten Wasserverlusten kommt.

Es ist an der Flüssigkeitsausgabe der Leitungseinheit eine Anschlußvorrichtung zum Anschluß einer weiteren Flüssigkeitsleitung an die Leitungseinheit vorgesehen Die weitere Flüssigkeitsleitung kann insbesondere ein Schlauch sein, der beispielsweise zu einer Regnerdüse o. dgl. führt. Vorzugsweise ist die Anschlußeinrichtung als Schlauch-Schnellkupplung ausgebildet, an die der Schlauch schnell und ohne Zuhilfenahme von Werkzeugen angeschlossen bzw. von der er abgenommen werden kann. Die Anschlußvorrichtung kann ein einstückig mit einem Gehäuse der Absperrvorrichtung ausgebildeter Stutzen sein. Vorzugsweise ist die Flüssigkeitsausgabe derart ausgerichtet, daß bei im wesentlichen senkrecht stehender Pumpe die Flüssigkeit schräg nach unten abgegeben wird. Dies erlaubt eine bequeme Handhabung der Absperreinrichtung und der Anschlußeinrichtung. Ein elektrisches Versorgungskabel für die Tauchpumpe kann durch der Leitungseinheit zugeordnete Befestigungsmittel, insbesondere durch an dieser befestigbare Klemmhalter, entlang der formstabilen Leitungseinheit zur Tauchpumpe geführt werden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte Ausführungen darstellen können. Es zeigen
- Fig. 1: eine teilweise geschnittene Seitenansicht einer Ausführungsform einer erfindungsgemäßen Leitungsvorrichtung und
- Fig. 2: eine gebrochene Seitenansicht einer Anfasung im Bereich II eines Rohrendes in Fig. 1.

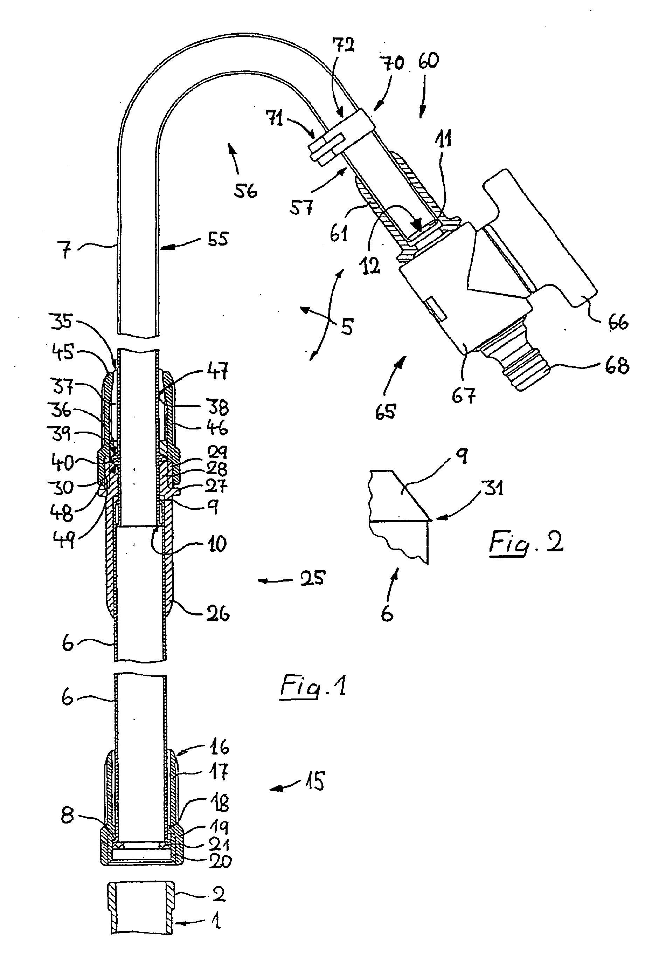

Die Seitenansicht in Fig. 1 zeigt eine als Teleskop-Standrohr ausgebildete Vorrichtung zur Leitung von Wasser, das von einer vollständig in Wasser eingetauchten Tauchpumpe zu einem oberhalb der Wasseroberfläche liegenden Ausgabeort gefördert wird. Die nicht dargestellte Tauchpumpe hat einen im wesentlichen vertikal nach oben aus dem Tauchpumpengehäuse führenden zylindrischen Schraubanschlußstutzen 1, an dessen Endbereich ein Außengewinde 2 ausgebildet ist. Der Gewindestutzen 1 ist zum Zusammenwirken mit einer später beschriebenen Anschlußeinrichtung der Leitungseinheit ausgebildet und ermöglicht eine flüssigkeitsdichte, starre aber lösbare Befestigung der Leitungseinheit an der Tauchpumpe.

Die gezeigte Ausführungsform einer Leitungseinheit 5 ist als biegesteifes Teleskoprohr mit einer Krümmung ausgebildet. Das Teleskoprohr hat ein unteres, erstes Rohrsegment 6 und ein darin parallel zur Längsachse des Rohrsegmentes verschiebbar angeordnetes oberes, zweites Rohrsegment 7, das einen geringeren Durchmesser hat als das erste Rohrsegment. Beide Rohrsegmente 6, 7 sind aus biegesteifen, dünnwandigen nahtlosen Aluminiumrahren hergestellt und sind im Querschnitt kreisrund. Das untere, erste Rohrsegment 6 weist an seinem dem Stutzen 1 zugewandten Ende eine Aufbördelung 8 in Form eines nach außen gerichteten Kragens auf, der in Axialrichtung des Rohres hintergreifbar ist. Am gegenüberliegenden Ende des ersten Rohrsegments ist eine nach innen gerichtete Anfasung 9 ausgebildet, die im Zusammenhang mit Fig. 2 näher beschrieben wird. Das obere Rohrsegment 7 ist an seinen Enden ähnlich ausgebildet und weist an seinem in das erste Rohrsegment 6 eingesteckten unteren Ende eine Aufbördelung 10 und an seinem anderen, freien Ende eine Anfasung 11 auf. Das mit der Anfasung 11 versehene freie Rohrende bildet eine Flüssigkeitsabgabe 12, die durch das Teleskoprohr 5 flüssigkeitsleitend mit dem Stutzen 1 verbindbar ist.

Der Innendurchmesser des unteren Rohrsegments 6 im Bereich der Anfasung 9 entspricht im wesentlichen dem Außendurchmesser des oberen Rohrsegments 7, während der Außendurchmesser des oberen Rohrsegmentes 7 im Bereich der Aufbördelung 10 im wesentlichen dem Innendurchmesser des unteren Rohrsegments entspricht. Dadurch wird eine spielarme Axialführung des oberen Rohrsegmentes 7 im unteren Rohrsegment 6 geschaffen. Das nach innen gerichtete Rohrende im Bereich derAnfasung 9 hintergreift in axialer Richtung die Aufbördelung 10, während diese in axialer Richtung die Durchmesserverengung im Bereich der Fase 9 hintergreift. Dadurch ist das in das untere Rohrsegment 6 eingeschobene obere Rohrsegment unverlierbar im unteren Rohrsegment 6 gesichert und kann nach oben nicht vollständig aus diesem herausgezogen werden. Diese Rohrverbindung mit Anschlag gegen Herausziehen ist zudem wegen der aneinander angepaßten Durchmesser fast flüssigkeitsundurchlässig.

Am unteren Ende des unteren Rohrsegments 6 ist eine Anschlußeinrichtung 15 zur lösbaren Verbindung der Leitungseinheit 5 mit der Tauchpumpe vorgesehen. Ein wesentliches Element der Anschlußeinrichtung 15 ist eine im wesentlichen zylindrische Kunststoffhülse 16. Diese hat einen zylindrischen oberen Abschnitt 17, dessen Innendurchmesser geringfügig grö-βer ist als der Außendurchmesser des unteren Rohrsegments 6 und an dessen Außenumfang axial verlaufende Griffrippen ausgebildet sind. Am unteren Ende des oberen Abschnittes 17 ist ein nach innen gerichteter Kragen 18 ausgebildet, dessen Innendurchmesser im wesentlichen dem Außendurchmesser des unteren Rohrsegmentes 6 entspricht. Ein an den Kragen 18 nach unten anschließender unterer Abschnitt 19 hat einen Innendurchmesser, der im wesentlichen dem Au-βendurchmesser des unteren Rohrsegmentes 6 im Bereich der Aufbördelung 8 entspricht. Der untere Abschnitt 19 hat ein Innengewinde 20, das zum Zusammenwirken mit dem Außengewinde 2 des Stutzens 1 vorgesehen ist. Beim Zusammenbau der Leitungseinheit 5 mit der Tauchpumpe zur Bildung einer Tauchpumpen-Anordnung wird die Kunststoffhülse 16 manuell mit dem Innengewinde 20 auf das Außengewinde 2 des Anschlußstutzens 1 aufgeschraubt. Dabei drückt der nach innen gerichtete Vorsprung 18 der Hülse den aufgebördelten Rand des unteren Rohrsegmentes 6 unter Zwischenschlage einer Kunststoff-Flachdichtung 21 gegen den oberen Rand des Anschlußstutzens 1 und stellt dabei eine mechanisch feste und hinreichend wasserdichte flüssigkeitsleitende Verbindung zwischen Leitungseinheit 5 und Tauchpumpe her.

Auf das obere Ende des unteren Rohrsegmentes 6 ist ein im wesentlichen zylindrisches Kunststoff-Halteelement 25 aufgesteckt. Das Halteelement 25 hat einen unteren Abschnitt 26 mit einem Innendurchmesser, der im wesentlichen dem Außendurchmesser des unteren Rohrsegmentes 6 entspricht, jedoch ein geringfügiges Untermaß aufweisen kann. Oberhalb einer bundförmigen Durchmessererweiterung 27 schließt ein oberer Abschnitt 28 an, dessen Innendurchmesser im wesentlichen dem Außendurchmesser des zweiten Rohrsegmentes 7 entspricht. Dadurch wirkt der obere Abschnitt 28 des Halters 25 als Führung für das obere Rohrsegment 7 bei axialer Verschiebung. An der Außenseite des oberen Abschnittes 28 ist ein Außengewinde 29 ausgebildet. Der obere Randbereich des Halters 25 ist zur Ausbildung einer Abdichtung gestaltet, indem der Rand nach innen, d.h. zum oberen Rohrsegment 7 hin, eine etwa 45° zur Rohrachse verlaufende Abschrägung 30 aufweist.

Beim Zusammenbau wird das obere Ende des unteren Rohrsegmentes 6 in die zylindrische Öffnung des unteren Abschnittes 26 des Halters 25 eingeschoben, wobei die Anfasung 9 das Einschieben auch bei leichtem Untermaß der Öffnung im unteren Abschnitt 26 vereinfacht. Die in Fig. 2 im Detail gezeigte Anfasung 9 des oberen Rohrendes ist vorzugsweise durch Rollen erzeugt, wobei gleichzeitig ein kleiner, scharfer, nach außen gerichteter Grat 31 entsteht, der in das weiche Kunststoffmaterial des Halters 25 formschlüssig eingreift und der das untere Rohrsegment in dem Kunststoffhalter 25 gegen Herausziehen fest verankert.

Auf das obere Rohrsegment 7 ist von der Seite der Anfasung 11 her eine geschlitzte Kunststoff-Hülse 35 aufgeschoben, deren zylindrischer Innendurchmesser im wesentlichen dem Außendurchmesser des oberen Rohrsegmentes 7 entspricht. Die Hülse 35 hat einen ringförmig geschlossenen, zylindrischen unteren Abschnitt 36, der dem Halter 25 zugewandt ist, sowie einen mit dem unteren Abschnitt einstückig ausgebildeten oberen Abschnitt 37, in dem vom oberen Ende her vier gleichmäßig um den Umfang der Hülse 35 herum verteilte, sich zum Ringabschnitt 36 leicht verjüngende axiale Schlitze ausgespart sind. Im Bereich der Schlitze ist die Hülse 35 durch radiale Bewegung der zwischen den Schlitzen gebildeten Laschen auf spreizbar bzw. zusammendrückbar. Im oberen, dem Ringabschnitt 36 abgewandten Endbereich weisen die durch die Schlitze getrennten Laschen an ihren Außenweiten konische Schrägflächen 38 auf, die in Richtung auf das untere Rohrsegment 6 eine Außendurchmessererweiterung der Hülse 35 bewirken. Am unteren Stirnende des unteren Abschnitts 36 ist eine konische Abschrägung 39 angebracht. Die Abschrägung 39 begrenzt zusammen mit der Abschrägung 30 des Halters 25 einen im Querschnitt im wesentlichen dreieckförmigen oder trapezförmigen Ringraum, der sich zum oberen Rohrsegment 7 hin erweitert und in den ein Kunststoff-O-Ring 40 eingelegt ist.

Über die geschlitzte Hülse 35 ist eine ebenfalls vom angefasten Ende des oberen Rohrsegmentes 7 her aufgeschobene Kunststoff-Klemmhülse 45 gestülpt. Die Klemmhülse 45 hat einen oberen Abschnitt 46, an dessen im wesentlichen zylindrische Außenfläche axiale Griffrillen angebracht sind. Am Innenumfang des oberen Abschnitts 46 ist eine konische Schrägfläche 47 ausgebildet, die mit den Schrägflächen 38 der geschlitzten Hülse 35 korrespondiert und im wesentlichen vollflächig an diesen anliegt. Der nach unten an die Schrägfläche 47 anschließende zylindrische Bereich hat einen Innendurchmesser, der im wesentlichen den Außendurchmesser des ringförmigen unteren Abschnittes 36 der geschlitzten Hülse 35 entspricht, so daß die Klemmhülse in diesem Bereich auf der geschlitzten Hülse geführt ist. Unterhalb des oberen Abschnittes 46 ist ein im Außendurchmesser erweiterter unterer Abschnitt 48 ausgebildet, der ein Innengewinde 49 hat, das auf das Außengewinde 29 des Halteelementes 25 aufgeschraubt werden kann.

Der Halter 25 bildet zusammen mit der geschlitzten Hülse 35 und der Überwurf-Klemmhülse 45 eine Klemmeinrichtung, durch die das erste Rohrsegment 6 und das zweite Rohrsegment 7 bei einer gewünschten Gesamtlänge der Leitungseinheit werkzeuglos aneinander festlegbar sind. Dafür wird zunächst die Klemmhülse 45 von dem Halter25 zumindest teilweise abgeschraubt, so daß sich die Schrägflächen 38, 47 axial gegeneinander verschieben, wodurch eine auf die Laschen der geschlitzten Hülse 35 nach innen wirkende Radialkraft aufgehoben wird. In diesem gelokkerten Zustand kann das obere Rohrsegment 7 axial relativ zum unteren Rohrsegment 6 verschoben werden, wobei der nach innen gebogene Rand der Anfasung 9 zusammen mit der Aufbördelung 10 einen axialen Anschlag gegen völliges Auseinanderziehen der Rohrsegmente bildet. Die Rohrsegmente 6, 7 werden in die gewünschte relative Lage zueinander verschoben. Ist die gewünschte Länge der Leitungseinheit 5 eingestellt, dann wird manuell die Klemmhülse 45 auf den Halter 25 aufgeschraubt. Im Bereich der aufeinander abgleitenden Schrägflächen werden die Laschen der geschlitzten Hülse 35 nach innen auf das Rohrsegment 7 gedrückt und sorgen für eine kraftschlüssige Festlegung des oberen Rohres in seiner relativen Position zum unteren Rohr und für eine insgesamt starre Verbindung der Rohrsegmente, so daß die Leitungseinheit 5 insgesamt biegesteif ist.

Während des Festziehens der Klemmhülse 45 wird außerdem die geschlitzte Hülse 35 geringfügig axial auf das untere Rohr 6 hin verschoben, wodurch der zwischen den Abschrägungen 30, 39 liegende Dichtring 40 zwischen den zusammenwirkenden Abschrägungen eingeklemmt wird und die Verbindungsstelle nach allen Seiten flüssigkeitsdicht abdichtet. Hierdurch ist zwischen den beiden Rohrsegmenten eine die Rohrsegmente flüssigkeitsdicht abdichtende Dichteinrichtung gebildet. Durch Lösen der Klemmhülse wird die Klemmung aufgehoben und das obere Rohrsegment 7 kann in dem unteren Rohrsegment 6 zur Einstellung der Länge der Leitungseinheit verschoben werden.

Das obere Rohrsegment 7 hat anschließend an den in das untere Rohrsegment 6 führenden geraden Rohrabschnitt 55 eine kreisbogenförmige Abwinkelung 56, die zu einem weiteren geraden Rohrabschnitt 57 des oberen Rohrsegmentes 7 führt. Die geraden Rohrabschnitte 55, 57 beidseitig der Abwinkelung 56 stehen in einem Winkel von ca. 145° zueinander. Die Abwinkelung hat einen Krümmungsradius, der etwa dem Dreifachen des Durchmessers des oberen Rohrsegmentes 7 entspricht. Die Ausführung der Abwinkelung des Innenrohres 7 als gleichmäßige Rohrkrümmung hat in der Fertigung den Vorteil, daß zunächst ein gerades Rohr in das untere Rohrsegment 6 eingesetzt werden kann, welches nachträglich gebogen wird. Gegenüber einer scharfen Abwinkelung hat der Bogen auch strömungstechnische Vorteile. Wird beispielsweise die Tauchpumpenanordnung zur Entleerung eines Wasserbehälters mit im wesentlichen senkrechten Wänden verwendet, so kann die Leitungseinheit 5 an der Oberkante des Wasserbehälters mit der Abwinkelung nach Art eines Hakens eingehängt werden. Durch die Längenverstellbarkeit der Teleskoprohr-Anordnung kann die Pumpe, eventuell unter Zwischenfügung von Verlängerungsrohrabschnitten, bis zum Behältergrund abgesenktwerden, wobei dann der Bogen nicht unmittelbar auf dem Behälterrand aufliegen muß. Die Länge der Leitungseinheit kann jedoch auch so eingestelltwerden, daß der Wassereinlaß der Pumpe, üblicherweise die Unterseite der Pumpe, einen bestimmten Abstand vom Behälterboden einhält, wobei der Bogen 56 des Innenrohres 7 am Behälterrand aufliegen und die vertikale Pumpenposition bestimmen kann. Hierdurch kann zum einen die Ansaugung von sich auf dem Behälterboden ansammelnden Schmutz verringert und damit die Zeit bis zu einer evtl. notwendig werdenden Reinigung eines ggf. in die Pumpe eingesetzten Filters verringert werden und/oder es kann insgesamt die Mitbeförderung von Schmutz im abgepumpten Wasser reduziert werden. Zum anderen kann über eine solche Anordnung der Tauchpumpe in einer bestimmten Höhe oberhalb eines Reservoirbodens der Verbleib eines Mindestvolumens von Wasser in einem Reservoir eingestellt werden. Die Abwinkelung 56 der insgesamt biegesteifen Anordnung bildet außerdem einen bequemen Handgriff nach Art eines Spazierstock-Griffes, mit Hilfe dessen die starr an der Leitungseinheit 5 angebrachte Tauchpumpe an ggf. schwer zugänglichen Stellen in einem Flüssigkeitsbehälter oder -reservoir abgestellt werden kann.

Auf das die Anfasung 11 aufweisende freie Ende des oberen Rohrsegmentes 7 ist ein Kunststoffhalter 60 aufgesteckt, dessen Aufbau im wesentlichen dem Aufbau des Halteelementes 25 entspricht. Im Unterschied zu diesem ist der untere Abschnitt 61 etwas kürzer und am oberen, mit einem nicht sichtbaren Außengewinde versehenen Abschnitt ist keine Abschrägung vorgesehen. Die Anfasung 11 ist ebenfalls durch Rollen hergestellt und hat entlang ihres Außenumfanges einen radial vorspringenden Grat, der sich in das weiche Kunststoffmaterials des Halters 60 eingräbt und diesen verrutschsicher auf dem Rohrende verankert.

Der Kunststoffhalter 60 dient als Verbindungselement, an das beispielsweise die in Fig. 1 gezeigte Absperreinrichtung 65 angeschraubt werden kann. Die Absperreinrichtung 65 ist als stufenlos einstellbares Absperrventil ausgebildet und hat einen zweiarmigen Betätigungshebel 66, über den ein in einem Ventilgehäuse 67 drehbarer Ventilkörper verdreht wird. Der für eine manuelle Betätigung vorgesehene Bedienungshebel 66 weist zweckmäßig von dem in Fig. 1 vertikalen Abschnitt der Teleskoprohr-Anordnung weg, was die Bedienung erleichtert. Durch die Absperreinrichtung kann auch bei häufiger Unterbrechung der Flüssigkeitsentnahme, wie z.B. bei mehrmaligem Füllen einer Gießkanne, die Tachpumpe ohne Wasserverlust ununterbrochen weiterlaufen.

Einstückig mit dem Ventilgehäuse 67 ist ein Nippel 68 für eine Schlauch-Schnellkupplung vorgesehen. Dieser ermöglicht zum einen eine direkte Wasserentnahme mit einem hinreichend gut gebündelten Strahl und zum anderen auch den Anschluß von beliebigen Geräten, insbesondere unter Zwischenfügung eines Schlauches. Er bildet somit eine der Flüssigkeitsabgabe 12 flüssigkeitsleitend zugeordnete Anschlußvorrichtung, die den Anschluß einer weiteren Flüssigkeitsleitung ermöglicht und gleichzeitig selbst eine Flüssigkeitsabgabeöffnung bildet. Die Ausflußrichtung im Endbereich 12 des gekrümmten Rohres bzw. des daran angesetzten Schlauchanschlußstückes 68 ist bei vertikaler Ausrichtung des Standrohres vorteilhaft schräg nach unten geneigt. Dies erlaubt eine bequeme Handhabung des Absperrventils und des Schlauchanschlußstutzens.

Das Ventilgehäuse 67 kann schwergängig drehbar auf dem Halter 60 befestigt sein, so daß Fehlstellungen beim Aufpressen des Halters 60 auf das obere Rohr noch korrigiert werden können oder daß in Einzelfällen zur besseren Handhabung der Betätigungshebel 66 in eine andere Position gerichtet werden kann.

Auf dem geraden Abschnitt 57 des oberen Rohrsegmentes 7 ist ein Befestigungsmittel zur werkzeuglosen Befestigung eines elektrischen Versorgungskabels für die Tauchpumpe vorgesehen. Das Befestigungsmittel ist als Klemmhalter für das Kabel ausgebildet. Er hat zwei durch aufspreizbare Finger begrenzte, hintereinander angeordnete Öffnungen, wobei die kleinere Öffnung 71 nur über die größere Öffnung 72 zugänglich ist. Zunächst wird das Versorgungskabel unter geringfügiger Aufspreizung der die Öffnungen umschließenden Finger von der Seite der größeren Öffnung her in die kleinere Öffnung 71 eingeklipst. Danach kann der Klemmhalter 70 unter erneuter Aufspreizung der Finger derart auf ein Rohr der Leitungseinheit geklipst werden, daß das Rohr durch die größere Öffnung 72 führt, wobei die Finger das Rohr seitlich weitgehend umgreifen. Es können mehrere Befestigungsmittel entlang der Leitungseinheit vorgesehen sein. Mit Hilfe der an der biegesteifen Leitungseinheit angebrachten Klemmhalter kann neben der Flüssigkeit auch das elektrische Versorgungskabel der Tauchpumpe kontrolliert aus der Flüssigkeit heraus geführt werden.

Bei der beschriebenen Ausführungsform einer Tauchpumpen-Anordnung ist an einem am Pumpengehäuse nach oben abführenden Pumpenausgang 1 ein gerades Standrohr 6 aufgeschraubt, in welchem ein Innenrohr 7 teleskopartig verschiebbar ist. Die relative Position der beiden ineinander verschiebbaren Rohre kann durch Festdrehen einer Überwurf-Schraubhülse klemmend festgelegt werden. Das dem Standrohr abgewandte Ende des Innenrohrs ist abgewinkelt und endet in einem Absperrventil 65 mit Schlauchanschluß 68. Die Abwinkelung 56, die vorzugsweise als Biegung des Innenrohrs 7 ausgeführt ist, erlaubt die Einhängung der Anordnung an den Rand eines Gefäßes.

Die Erfindung ist im Zusammenhang mit einer Tauchpumpe erläutert worden und besonders vorteilhaft einsetzbar. Eine erfindungsgemäße Leitungseinheit kann jedoch auch mit üblichen, außerhalb eines Flüssigkeitsreservoirs aufstellbaren Standpumpen vorteilhaft eingesetzt werden, die die Flüssigkeit über einen Saugschlauch aus einem Reservoir ansaugen. Eine starr mit einer Standpumpe verbundene biegesteife Leitungseinheit bildet eine bequem bedienbare Füssigkeitsentnahmestelle mit einem vorzugsweise höhenverstellbaren und abstellbaren Flüssigkeitsauslaß. Es kann ein transportabler, ortsfest installierbarer Wasserhahn geschaffen werden.

## Patentansprüche

1. Vorrichtung zur Leitung einer Flüssigkeit von einer mindestens teilweise in die Flüssigkeit eintauchbaren Tauchpumpe zu einer außerhalb der Flüssigkeit anordenbaren Flüssigkeitsausgabe, wobei die Vorrichtung eine biegesteife Leitungseinheit (5) aufweist, die zur starren lösbaren Verbindung mit der Tauchpumpe ausgebildet ist, wobei die Leitungseinheit (5) eine veränderbare Länge hat, **dadurch gekennzeichnet, daß** die Leitungseinheit eine Absperreinrichtung (65) für die Flüssigkeitsausgabe (12) und/oder eine der Flüssigkeitsausgabe (12) zugeordnete Anschlußvorrichtung (68) zum Anschluß einer weiteren Flüssigkeitsleitung aufweist.

2. Vorrichtung nach Anspruch 1, **dadurch gekennzeichnet, daß** die Länge der Leitungseinheit (5) stufenlos veränderbar und, vorzugsweise werkzeuglos, feststellbar ist.

3. Vorrichtung nach Anspruch 1 oder 2, **dadurch gekennzeichnet, daß** die Leitungseinheit (5) als Teleskoprohr ausgebildet ist, vorzugsweise mit einem ersten Rohrsegment (6) und einem in dem ersten Rohrsegment verschiebbar angeordneten zweiten Rohrsegment, wobei vorzugsweise das erste Rohrsegment (6) und das zweite Rohrsegment (7) durch eine Klemmeinrichtung (25, 35, 45) aneinander festlegbar sind und/oder zwischen dem ersten Rohrsegment (6) und dem zweiten Rohrsegment (7) eine die Rohrsegmente flüssigkeitsdicht abdichtende Dichteinrichtung (30, 39, 40) vorgesehen ist.

4. Vorrichtung nach Anspruch 1 oder 2, **dadurch gekennzeichnet, daß** die Leitungseinheit (5) derart biegesteif ist, daß die Tauchpumpe durch Bewegung der Leitungseinheit bewegbar ist.

5. Vorrichtung nach einem der vorhergehenden Ansprüche, **dadurch gekennzeichnet, daß** die Leitungseinheit (5) ein biegesteifes Rohr (6, 7) aufweist, insbesondere ein Metallrohr, vorzugsweise aus Aluminium.

6. Vorrichtung nach einem der vorhergehenden Ansprüche, **dadurch gekennzeichnet, daß** die Leitungseinheit (5), insbesondere das Rohr, eine Abwinkelung (56) aufweist, die vorzugsweise einen Winkel von mehr als 90° bildet, wobei der Winkel insbesondere zwischen 120° und 160° liegt, vorzugsweise bei ca. 145°.

7. Vorrichtung nach Anspruch 6, **dadurch gekennzeichnet, daß** die Abwinkelung (56) einen, vorzugsweise gleichmäßigen, Krümmungsradius hat, der zwischen dem Doppelten und dem Fünffachen des Durchmessers der Flüssigkeitsleitung beträgt, vorzugsweise ca. das Dreifache, und/oder daß die Abwinkelung (56) durch Biegen des Rohres (7) gebildet ist.

8. Vorrichtung nach einem der Ansprüche 3 bis 7, **dadurch gekennzeichnet, daß** mindestens ein Rohrsegment, vorzugsweise das erste Rohrsegment (1), gerade ist und daß ein anderes Rohrsegment, vorzugsweise das zweite Rohrsegment (7), die Abwinkelung (56) aufweist und/oder daß das Rohr (7) auf mindestens einer Seite der Abwinkelung (56), vorzugsweise beidseitig der Abwinkelung, einen geraden Rohrabschnitt (55, 57) hat.

9. Vorrichtung nach einem der vorhergehenden Ansprüche, **dadurch gekennzeichnet, daß** an der Leitungseinheit, insbesondere an dem ersten Rohrsegment, eine Anschlußeinrichtung (15) zur starren, flüssigkeitsleitenden Verbindung der Leitungseinheit mit einem Flüssigkeitsauslaß der Tauchpumpe vorgesehen ist, wobei vorzugsweise die Anschlußeinrichtung (15) als, vorzugsweise manuell betätigbare, Schraubverbindung ausgebildet ist.

10. Vorrichtung nach einem der vorhergehenden Ansprüche, **dadurch gekennzeichnet, daß** die Absperreinrichtung (65) für die Flüssigkeitsausgabe (12) manuell betätigbar ist, wobei sie vorzugsweise als insbesondere stufenlos einstellbares Absperrventil ausgebildet ist.

11. Vorrichtung nach einem der vorhergehenden Ansprüche, **dadurch gekennzeichnet, daß** die die Anschlußeinrichtung als Schlauch-Schnellkupplung (68) ausgebildet ist.

12. Tauchpumpen-Anordnung mit einer mindestens teilweise in die Flüssigkeit eintauchbaren Tauchpumpe und einer starr und lösbar an einen Auslaß der Tauchpumpe angeschlossenen biegesteifen Leitungseinheit (5), wobei die Leitungseinheit eine veränderbare Länge hat **dadurch gekennzeichnet, daß** die Leitungseinheit eine Absperreinrichtung (65) für die Flüssigkeitsausgabe (12) und/oder eine der Flüssigkeitsausgabe (12) zugeordnete Anschlußvorrichtung (68) zum Anschluß einer weiteren Flüssigkeitsleitung aufweist.

13. Tauchpumpen-Anordnung nach Anspruch 12, **gekennzeichnet durch** die Merkmale des kennzeichnenden Teils von mindestens einem der Ansprüche 2 bis 11.

## Claims

1. Device for conveying a liquid from a submersible pump which is at least partly immersible in the liquid to a liquid discharge means positionable outside the liquid, said device having a flexurally rigid duct unit (5), which is constructed for rigid, detachable connection with the submersible pump, wherein the duct unit (5) has a variable length, **characterized in that** the duct unit has a stop device (65) for the liquid discharge means (12) and/or a connecting device (68) associated with the liquid discharge means (12) for the connection of a further liquid duct.

2. Device according to claim 1, **characterized in that** the length of the duct unit is continuously variable and can be fixed, preferably without tools.

3. Device according to claim 1 or 2, **characterized in that** the duct unit (5) is constructed as telescopic pipe, preferably with a first pipe segment (6) and a second pipe segment displaceably placed within the first pipe segment and preferably the first pipe segment (6) and the second pipe segment (7) can be fixed to one another by a clamping device (25, 35, 45) and/or between the first pipe segment (6) and the second pipe segment (7) is provided a sealing device (30, 39, 40) sealing in liquid-tight manner the pipe segments.

4. Device according to claim 1 or 2, **characterized in that** the duct unit (5) is flexurally rigid in such a way that the submersible pump is movable through the movement of the duct unit.

5. Device according to one of the preceding claims, **characterized in that** the duct unit (5) has a flexurally rigid pipe (6, 7), particularly'a metal pipe, preferably of aluminium.

6. Device according to one of the preceding claims, **characterized in that** the duct unit (5), particularly the pipe, has a bend (56), which preferably forms an angle of more than 90c, the angle being in particular between 120° and 1600, preferably approximately 1450.

7. Device according to claim 6, **characterized in that** the bend (56) has a preferably uniform radius of curvature between twice and five times the diameter of the liquid duct and is preferably approximately three times said diameter, and/or the bend (56) is formed by bending the pipe (7).

8. Device according to one of the claims 3 to 7, **characterized in that** at least one pipe segment, preferably the first pipe segment (1), is straight and that another pipe segment, preferably the second pipe segment (7), has the bend (56) and/or that the pipe (7) has on at least one side of the bend (56) and preferably on either side thereof, a straight pipe section (55, 57).

9. Device according to one of the preceding claims, **characterized in that** on the duct unit, particularly on the first pipe segment, is provided a connecting device (15) for the rigid, liquidconveying connection of the duct unit with a liquid outlet of the submersible pump and preferably the connecting device (15) is constructed as a preferably manually operable screw connection.

10. Device according to one of the preceding claims, **characterized in that** the device (65) for the liquid discharge means (12) is manually operable and is preferably constructed as an in particular continuously adjustable stop valve.

11. Device according to one of the preceding claims, **characterized in that** the connecting device (68) is constructed as a rapid hose coupling (68).

12. Submersible pump arrangement with a submersible pump at least partly immersible in the liquid and a flexurally rigid duct unit (5) connected rigidly and detachably to an outlet of the submersible pump, wherein the duct unit (5) has a variable length, **characterized in that** the duct unit has a stop device (65) for the liquid discharge means (12) and/or a connecting device (68) associated with the liquid discharge means (12) for the connection of a further liquid duct.

13. Submersible pump arrangement according to claim 12, **characterized by** features of the characterizing part of at least one of the claims 2 to 11.

## Revendications

1. Dispositif pour la conduction d'un liquide à partir d'une pompe submersible pouvant être immergé au moins en partie dans le liquide à une sortie de liquide pouvant être disposée à l'extérieur du liquide, le dispositif présentant une unité de guidage (5) rigide à la flexion réalisée pour un raccordement rigide et désserrable avec la pompe submersible, l'unité de guidage (5) présentant une longueur variable, **caractérisé en ce que** l'unité de guidage présente un moyen d'obturation (65) pour le moyen d'évacuation des liquides (12) et/ou un moyen de raccordement (68) associé au moyen d'évacuation des liquides (12) pour le raccordement d'un autre conduit de liquides.

2. Dispositif d'après la revendication 1, **caractérisé en ce que** la longueur de l'unité de guidage peut être variée de manière continue et qu'elle peut être fixée de préférence sans outils.

3. Dispositif d'après la revendication 1 ou 2, **caractérisé en ce que** l'unité de guidage (5) est réalisée en tant que gaine télescopique, de préférence avec un premier segment de tuyau (6) et un deuxième segment de tuyau disposé de manière déplaçable dans le premier segment de tuyau, le premier segment de tuyau (6) et le deuxième segment de tuyau (7) pouvant être fixés l'un à l'autre par un moyen de serrage (25, 35, 45) et/ou qu'entre le premier segment de tuyau (6) et le deuxième segment de tuyau (7) est prévu un moyen antifuite (30, 39, 40) étanchant les segments de tuyau à l'épreuve des liquides.

4. Dispositif d'après la revendication 1 ou 2, **caractérisé en ce que** l'unité de guidage (5) est tellement rigide à la flexion, que la pompe submersible peut être déplacée par des mouvements de l'unité de guidage.

5. Dispositif d'après une des revendications précédentes, **caractérisé en ce que** l'unité de guidage (5) présente un tuyau (6, 7) rigide à la flexion, notamment un tuyau métallique, de préférence en aluminium.

6. Dispositif d'après une des revendications précédentes, **caractérisé en ce que** l'unité de guidage (5), notamment le tuyau, présente une courbure (56), formant de préférence un angle de plus de 90°, l'angle présentant notamment une valeur entre 120° et 160°, de préférence à peu près de 1450.

7. Dispositif d'après la revendication 6, **caractérisé en ce que** la courbure (56) présente un rayon de courbure de préférence uniforme, qui se monte à une valeur entre le double et le quintuple du diamètre du conduit de liquide, de préférence à une valeur correspondant à peu près au triple, et/ou **en ce que** la courbure (56) est réalisée par une flexion du tuyau (7).

8. Dispositif d'après une des revendications de 3 à 7, **caractérisé en ce qu'**au moins un segment de tuyau, de préférence le premier segment de tuyau (1) est droit et **en ce qu'**un autre segment de tuyau, de préférence le deuxième segment de tuyau (7) présente la courbure (56) et/ou **en ce que** le tuyau (7) présente une partie de tuyau (55, 57) droite au moins d'un côté de la courbure (56), de préférence des deux côtés de la courbure.

9. Dispositif d'après une des revendications précédentes, **caractérisé en ce qu'**auprès de l'unité de guidage, notamment auprès du premier segment de tuyau est prévu un moyen de raccordement (15) pour la jonction rigide et capable de conduire des liquides, de l'unité de guidage avec une sortie des liquides de la pompe submersible, le moyen de raccordement (15) étant de préférence réalisé en tant que raccordement à vis pouvant être actionné de préférence manuellement.

10. Dispositif d'après une des revendications précédentes, **caractérisé en ce que** le moyen d'obturation (65) pour le moyen d'évacuation des liquides (12) pouvant être actionné de manière manuelle, le moyen d'obturation étant réalisé de préférence en tant que soupape d'arrêt pouvant notamment être réglé de manière progressive et continue.

11. Dispositif d'après une des revendications précédentes, **caractérisé en ce que** le moyen de raccordement est réalisé en tant que raccord rapide de tuyaux (68).

12. Configuration de pompe submersible avec une pompe submersible pouvant être immergée au moins en partie dans le liquide et une unité de guidage (5) rigide à la flexion étant raccordée de manière rigide et désserrable à la sortie de la pompe submersible, l'unité de guidage (5) présentant une longueur variable, **caractérisé en ce que** l'unité de guidage présente un moyen d'obturation (65) pour le moyen d'évacuation des liquides (12) et/ou un moyen de raccordement (68) associé au moyen d'évacuation des liquides (12) pour le raccordement d'un autre conduit de liquides.

13. Configuration de pompe submersible d'après la revendication 12, **caractérisé par** les caractéristiques de la partie significatives d'après au moins une des revendications de 2 à 11.
